# EUROPÄISCHE PATENTANMELDUNG

(11) **EP 2 915 629 A1**
(43) Veröffentlichungstag der Anmeldung: **09.09.2015**
(21) Anmeldenummer: 15152587.0
(22) Anmeldetag: 27.01.2015
(51) Int. Cl.: B24B 45/00, B24B 23/02, B24B 55/00, B27B 5/32

(54) **Spannmutter**

(30) Priorität: 28.02.2014 DE 102014102705
(71) Anmelder: Metabowerke GmbH, 72622 Nürtingen (DE)
(72) Erfinder: Küther, Ludwig, 71111 Waldenbuch (DE); Hiller, Matthias, 72657 Altenriet (DE)
(74) Vertreter: Markfort, Iris-Anne Lucie

(57) **Zusammenfassung**

Die Erfindung betrifft eine Spannmutter (10) zum Fixieren eines scheibenförmigen Werkzeugs an einer rotierbaren Werkzeugspindel einer angetriebenen Werkzeugmaschine mit Auslaufbremse, umfassend einen Mutterkörper mit einem Innengewinde zum Aufschrauben auf der Werkzeugspindel, einen relativ zu dem Mutterkörper bewegbaren Sicherungsring (30), der unverlierbar mit dem Mutterkörper (20) verbunden und drehfest mit der Werkzeugspindel verbindbar ist, und eine elastische Federeinheit (40), die in einem in seiner axialer Erstreckung variablem Zwischenraum zwischen dem Mutterkörper (20) und dem Sicherungsring (30) angeordnet ist und infolge einer in Richtung der Längsachse (12) der Werkzeugspindel wirkenden Axialkraft verformt werden kann,
dadurch gekennzeichnet, dass der variablen Zwischenraum in seiner maximalen axialen Erstreckung größer ist als die darin aufgenommene elastische Federeinheit (40).

## Beschreibung

Die vorliegende Erfindung betrifft eine Spannmutter zum Fixieren eines scheibenförmigen Werkzeugs an einer rotierbaren Werkzeugspindel einer angetriebenen Werkzeugmaschine mit Auslaufbremse. Ferner betrifft die Erfindung auch eine angetriebene Werkzeugmaschine mit Auslaufbremse sowie einer Spannmutter zum Fixieren eines scheibenförmigen Werkzeugs an einer rotierbaren Werkzeugspindel der Werkzeugmaschine.

Insbesondere bei Kreissägen und Winkelschleifern ist es aus dem Stand der Technik bekannt, diese mit einer Bremsvorrichtung bzw. Auslaufbremse (auch als "Spindel-Stopp" bekannt) auszustatten, um beim Abschalten des Antriebs die Werkzeugspindel so schnell wie möglich zum Stillstand zu bringen. Gerade bei Winkelschleifern mit ihren schnelllaufenden Schleifscheiben als Werkzeug besteht bei der plötzlichen Spindelabbremsung jedoch das Problem, dass infolge der Trägheit des scheibenförmigen Werkzeugs dieses sich mit dem verbliebenen Schwungmoment weiterbewegen möchte und dieses Schwungmoment auf die Spannmutter überträgt, welche das scheibenförmigen Werkzeug an der rotierbaren Werkzeugspindel fixieren soll. Besonders problematisch in diesem Zusammenhang ist, dass das Schwungmoment des scheibenförmigen Werkzeugs in seiner Richtung der Anzugsdrehrichtung der Spannmutter genau entgegengesetzt gerichtet ist. Somit bewirkt das Schwungmoment des scheibenförmigen Werkzeugs eine Lösebewegung der Spannmutter, die ein erhebliches Gefährdungsrisiko für den Benutzer mit sich bringt.

So wird nach dem Abschalten der Werkzeugmaschine die auslaufende Schleifscheibe in sehr kurzer Zeit bis zum Stillstand abgebremst, wobei die Bremsvorrichtungen der Auslaufbremse jedoch nur auf die Werkzeugspindel wirken. Die Schleifscheibe läuft ein Stück weiter und überträgt das verbliebende Schwungmoment auf die reibschlüssig mit ihr verbundene Spannmutter, wodurch letztere entgegen der Spanndrehrichtung mitgenommen wird. Herkömmliche Spannmuttern können sich daher von der Werkzeugspindel der Werkzeugmaschine lösen, womit auch eine Fixierung der noch rotierenden Schleifscheibe entfällt.

Aus dem Stand der Technik sind unterschiedlichste Lösungsansätze zur Lösung dieses Problems bekannt. So offenbart das Dokument EP 0 459 697 A1 beispielsweise eine Spannmutter, mit deren Hilfe beim Abbremsen der Werkzeugspindel die Bremskraft mit auf die Schleifscheibe übertragen werden soll. Hierzu ist eine Spannmutter vorgesehen, die mit einem drehfest an der Werkzeugspindel angeordneten Druckflansch zusammenwirkt, zwischen dem und der Spannmutter die Schleifscheibe eingespannt ist. Ein Lösen der Spannmutter ist bei dieser Lösung nur dann möglich, wenn zuvor über eine manuelle Betätigung die Hemmung eines zugehörigen Sperrwerks aufgehoben wurde. Dieses zusätzliche Sperrwerk erfordert jedoch einen komplizierten Aufbau, der seinerseits wiederum störanfällig ist.

Bei einer weiteren Lösung gemäß der deutschen Offenlegung DE 43 37 023 A1 ist eine Spannmutter offenbart, die einen in ihrem Mutterkörper angeordneten Druckring umfasst, der im Mutterkörper über ein Gewinde gehalten ist, dessen Drehsinn dem Gewinde zwischen dem Mutterkörper und der Werkzeugspindel genau entgegengesetzt gerichtet ist. Der Druckring ragt über den Mutterkörper hinaus, so dass das scheibenförmige Werkzeug sein Schwungmoment nur auf den Druckring zu übertragen vermag, der sich infolge des Schwungmoments von der Schleifscheibe wegbewegt, ohne seine Drehbewegung auf den Mutterkörper zu übertragen. Nachteilig bei dieser Lösung ist jedoch unter anderem das gegenüber anderen Lösungen verringerte Reibmoment, dass der Druckring (anstelle der gesamten Spannmutter) auf das scheibenförmigen Werkzeug zu übertragen vermag und die damit bei gleicher Größe der Spannmutter verschlechterte Fixierung des scheibenförmigen Werkzeugs an der Werkzeugspindel.

Weitere in ihrem Aufbau ebenfalls komplizierte Lösungen sind beispielsweise in den Dokumenten DE 41 31 514 A1, DE 41 22 320 A1, DE 195 09 147 C1, EP 0 615 815 A1 und DE 102 05 848 A1 offenbart.

Der vorliegenden Erfindung liegt die Aufgabe zugrunde, eine Spannmutter zum Fixieren eines scheibenförmigen Werkzeugs an einer Werkzeugspindel einer angetriebenen Werkzeugmaschine mit Auslaufbremse bereit zu stellen, die einen einfachen Aufbau hat, ein unbeabsichtigtes Lösen des Werkzeugs von der Werkzeugspindel verhindert und bei deren Montage ein vergleichsweise geringer Kraftaufwand benötigt wird. Eine weitere Aufgabe der vorliegenden Erfindung besteht darin, eine Spannmutter bereitzustellen, die anstelle einer herkömmlichen Spannmutter verwendet werden kann.

Zur Lösung der vorstehend genannten Aufgaben wird eine Spannmutter vorgeschlagen, die die Merkmale des Anspruchs 1 aufweist. Demgemäß umfasst die erfindungsgemäße Spannmutter einen Mutterkörper mit einem Innengewinde zum Aufschrauben auf die Werkzeugspindel, einen relativ zu dem Mutterkörper bewegbaren Sicherungsring, der unverlierbar mit dem Mutterkörper verbunden und drehfest mit der Werkzeugspindel verbindbar ist, sowie eine elastische Federeinheit, die in einem in seiner axialen Erstreckung variablen Zwischenraum zwischen dem Mutterkörper und dem damit verbundenen Sicherungsring angeordnet ist und infolge einer in Richtung der Werkzeugspindel wirkenden Axialkraft verformt werden kann. Der variable Zwischenraum ist dabei in seiner maximalen axialen Erstreckung größer als die darin aufgenommene elastische Federeinheit. Infolgedessen verbleibt die elastische Federeinheit so lange entspannt, wie keine in Axialrichtung (bezogen auf die Ausrichtung der Werkzeugspindelachse) wirkende Kraft direkt oder indirekt auf sie einwirkt.

Auf diese Weise wird eine Spannmutter bereitgestellt, bei der sich der Sicherungsring und der unverlierbar damit verbundene Mutterkörper reibungsarm relativ zueinander bewegen können, wodurch die Montage nennenswert erleichtert wird. Erst wenn sich der Sicherungsring an das zu fixierende Werkzeug anlegt und dieses gegen einen zugehörigen Anlageflansch, eine Anlageschulter oder einen Anschlag der Werkzeugspindel verspannt, bewirkt der hiervon ausgehende Gegendruck eine axiale Verschiebung des Sicherungsrings in Richtung zu dem Mutterkörper. Auf diese Weise wird der axiale Zwischenraum zwischen Mutterkörper und Sicherungsring verkleinert und der Sicherungsring überträgt die wirkende Axialkraft auf die in dem axialen Zwischenraum aufgenommene elastische Federeinheit, wodurch diese elastisch verformt wird.

Sobald die Federeinheit verformt, das heißt komprimiert wird, erhöht sich die Reibungskraft, welche zwischen dem Innengewinde des Mutterkörpers und einem Außengewinde der Werkzeugspindel auftritt, wenn die Spannmutter auf ein entsprechendes Außengewinde der Werkzeugspindel aufgeschraubt ist. Folglich kann die vorliegende Spannmutter zumindest so lange reibungsarm (wie eine übliche Mutter) auf die Werkzeugspindel aufgeschraubt werden, bis die elastische Federeinheit infolge des Gegendrucks des scheibenförmigen Werkzeugs auf den Sicherungsring und einer entsprechenden Axialkraft eine Verformung erfährt. Ab diesem Zeitpunkt bewirkt die elastische Federeinheit der erfindungsgemäßen Spannmutter eine Sicherung der Spannmutter gegen ein unerwünschtes Lösen von der Werkzeugspindel.

Der Sicherungsring ist erfindungsgemäß drehfest mit der Werkzeugspindel verbindbar und liegt im montierten Zustand an dem scheibenförmigen Werkzeug der Werkzeugmaschine an. Wird nun die rotierbare Werkzeugspindel mit Hilfe der Auslaufbremse in sehr kurzer Zeit abgebremst, so überträgt das scheibenförmige Werkzeug sein Schwungmoment auf den anliegenden, drehfest mit der abgebremsten Werkzeugspindel verbundenen Sicherungsring. Je nach Ausgestaltung des Sicherungsrings, des Mutterkörpers und der elastischen Federeinheit kann der Sicherungsring bei vollständig angezogener Spannmutter über den Mutterkörper vorstehen, so dass das scheibenförmigen Werkzeug sein Schwungmoment nicht auf den Mutterkörper zu übertragen vermag. Alternativ können jedoch auch Sicherungsring und Mutterkörper an dem scheibenförmigen Werkzeug zur Anlage gelangen.

Selbst in solchen Fällen, in denen der Mutterkörper und der Sicherungsring derart ausgebildet sind, dass der Mutterkörper in einer Stellung, in der das scheibenförmige Werkzeug mit Hilfe der Spannmutter fixiert ist, ebenfalls zur Anlage an das scheibenförmige Werkzeug gelangt ist, wird nur so lange ein Schwungmoment auf den Mutterkörper übertragen, so lange dieser in Anlage mit dem scheibenförmigen Werkzeug steht. Wenn nun der Mutterkörper infolge eines solchen übertragenen Teils des Schwungmoments eine Drehbewegung vollzieht, die der Anzugsdrehrichtung entgegengesetzt ist und ein Lösen der Spannmutter zur Folge haben könnte, bewirkt die elastische Federeinheit eine ausreichend hohe Reibungskraft am Innengewinde des Mutterkörpers, dass ein vollständiges Lösen der Spannmutter unterbunden werden kann. Zugleich wird kein Schwungmoment mehr auf den Mutterkörper übertragen, sobald dieser infolge seiner vollzogenen Drehbewegung nicht mehr an dem scheibenförmigen Werkzeug anliegt.

Dadurch, dass der Mutterkörper und der Sicherungsring der Spannmutter sich relativ zueinander bewegen können, kann der Mutterkörper einer Drehbewegung zum Auf- bzw. Abschrauben auf die Werkzeugspindel vollziehen, während der Sicherungsring drehfest mit der Werkzeugspindel verbindbar ist.

Weiterhin kann die elastische Federeinheit bei einer Weiterentwicklung der Erfindung wenigstens eine Feder umfassen. Alternativ ist jedoch auch denkbar, dass die Federeinheit durch ein elastisches Element, beispielsweise einen Elastomerkörper oder dergleichen, ausgebildet ist. Entscheidend ist dabei nur, dass die elastische Federeinheit eine elastische Deformation vollziehen kann.

Der Sicherungsring kann relativ zu dem Mutterkörper um eine zu der Werkzeugspindel parallele Achse verdrehbar und entlang dieser Achse translatorisch verschiebbar ausgebildet sein. Ferner kann der Sicherungsring zur drehfesten Verbindung mit der Werkzeugspindel wenigstens einen, vorzugsweise mehrere Sicherungsvorsprünge aufweisen, wobei jeder Sicherungsvorsprung in einer korrespondierenden Nut an der Werkzeugspindel aufnehmbar ist.

Um eine verliersichere Verbindung von Sicherungsring und Mutterkörper zu schaffen und zugleich sicherzustellen, dass sich die elastische Federeinheit innerhalb des variablen Zwischenraums zwischen Mutterkörper und Sicherungsring ausreichend abstützen und so eine erhöhte Reibung an dem Innengewinde des Mutterkörpers bewirken kann, kann vorgesehen sein, dass der Sicherungsring zumindest abschnittsweise von dem Mutterkörper hintergriffen und auf diese Weise unverlierbar mit diesem verbunden ist.

Bei einer Weiterentwicklung der Erfindung kann vorgesehen sein, dass die wenigstens eine Feder der elastischen Federeinheit als Tellerfeder ausgebildet ist. Hierdurch wird ein besonders einfacher Zusammenbau der Spannmutter bereitgestellt.

Weiterhin kann die elastische Federeinheit eine Federkennlinie aufweisen, die in ihrem Arbeitsbereich zumindest einen degressiven Abschnitt aufweist. Der Arbeitsbereich der elastischen Federeinheit ist dabei derjenige Bereich, in dem die elastische Federeinheit, in eingebautem Zustand in der Spannmutter, ausgehend von ihrem entspannten Ausgangszustand verformt werden kann.

Bevorzugt umfasst die Federkennlinie einen linearen oder sogar progressiven Kurvenanfang und geht dann in einen degressiven Abschnitt über, wodurch der Anwender beim Aufschrauben der Spannmutter einen taktilen Hinweis darauf bekommen kann, dass der Sicherungsring und gegebenenfalls der Mutterkörper bereits zur Anlage an das scheibenförmige Werkzeug gelangt ist. Durch den degressiven Abschnitt der Federkennlinie wird die sich aufbauende Reibung an dem Innengewinde des Mutterkörpers und das einer Aufschraubbewegung entgegenwirkende resultierende Reibmoment wieder ein Stück weit verringert, wodurch das Aufschrauben kurzzeitig erleichtert wird, bis die Spannmutter vollständig gegen das scheibenförmige Werkzeug aufgeschraubt ist und dieses entsprechend gegen einen Anlageflansch der Werkzeugspindel oder dergleichen festzuspannen vermag. Insbesondere in solchen Fällen, in denen sowohl der Sicherungsring als auch der Mutterkörper der Spannmutter an das scheibenförmigen Werkzeug angelegt werden sollen, um dieses zu fixieren, ist es günstig, wenn die Federkraft spätestens dann wieder abnimmt, wenn zu dem Reibmoment am Innengewinde des Mutterkörpers das resultierende Reibmoment an der Anlagefläche des Mutterkörper an dem scheibenförmigen Werkzeug hinzukommt. Auf diese Weise steht dem Fixiervorgang des Werkzeugs kein unverhältnismäßig hohes Reibmoment entgegen.

Der Sicherungsring kann einen Anlageabschnitt zur Anlage an das zu fixierende Werkzeug umfassen. Wie bereits vorstehend ausgeführt kann in gleicher Weise auch der Mutterkörper selbst einen entsprechenden Anlageabschnitt zur Anlage an das zu fixierende Werkzeug umfassen. Je nach Ausgestaltung kann zudem vorgesehen sein, dass in ihrer Endstellung, in der die Spannmutter das scheibenförmigen Werkzeug an der rotierenden Werkzeugspindel fixiert, sowohl der Anlageabschnitt des Sicherungsrings als auch der Anlageabschnitt des Mutterkörpers an dem Werkzeug anliegen.

Es kann ferner vorgesehen sein, dass der Mutterkörper eine umlaufende nutförmige Ausnehmung umfasst, die den Zwischenraum teilweise begrenzt, wobei der Sicherungsring zumindest abschnittsweise in der nutförmigen Ausnehmung aufnehmbar ist.

Der Sicherungsring kann an seinem Außenumfang einen wenigstens abschnittsweise umlaufenden Eingriffsabschnitt aufweisen, der mit einer radial nach innen erstreckten Schulter am Mutterkörper in der Weise zusammenwirken vermag, dass die axiale Bewegung des Sicherungsrings relativ zu dem Mutterkörper in eine erste Richtung begrenzt ist. Auf diese Weise hintergreift der Mutterkörper zumindest abschnittsweise den Sicherungsring und hält diesen unverlierbar mit dem Mutterkörper verbunden. Auch kann auf diese Weise die maximale axiale Erstreckung des Zwischenraums begrenzt werden.

Der Sicherungsring kann wenigstens einen ersten Stützabschnitt aufweisen, an dem sich die elastische Federeinheit abzustützen vermag. Weiterhin kann der Sicherungsring wenigstens einen zweiten Stützabschnitt aufweisen, mit dem er sich in einer zweiten Richtung axial an dem Mutterkörper abzustützen vermag. Auf diese Weise kann die maximale axiale Erstreckung des Zwischenraums begrenzt werden.

Die Erfindung wird nachfolgend anhand der figürlich dargestellten Ausführungsform näher erläutert. In den Figuren ist eine Ausführungsform gezeigt, bei der einzelne Merkmale der Erfindung miteinander kombiniert sind. Der Fachmann wird diese jedoch in Kenntnis der Ansprüche und der einleitenden Beschreibung auch unabhängig voneinander betrachten und gegebenenfalls zu weiteren sinnvollen Kombinationen oder Unterkombinationen verbinden können.

Es zeigen schematisch:
- Figur 1: eine isometrische Ansicht einer teilgeschnittenen erfindungsgemäßen Spannmutter, bei der die elastische Federeinheit entspannt ist;
- Figur 2: eine isometrische Ansicht einer teilgeschnittenen Spannmutter gemäß Figur 1, bei der die elastische Federeinheit verformt ist;
- Figur 3: eine Explosionsdarstellung der erfindungsgemäßen Spannmutter gemäß den Figuren 1 und 2; und
- Figur 4: eine schematische Darstellung einer beispielhaften Federkennlinie der elastischen Federeinheit der erfindungsgemäßen Spannmutter gemäß den Figuren 1 bis 3.

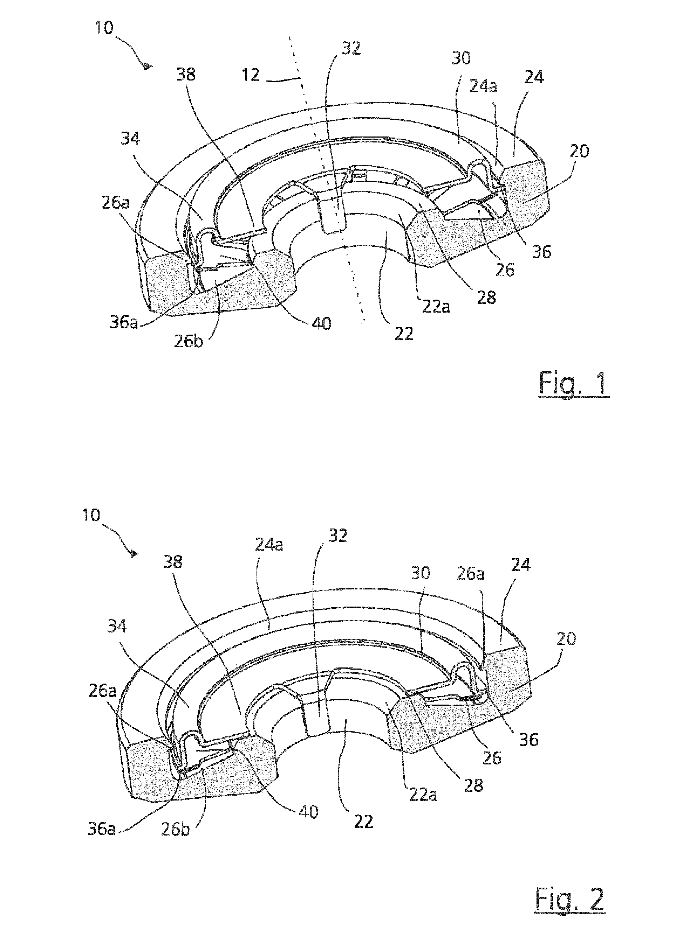

Die Figuren 1 bis 3 zeigen eine erfindungsgemäße Spannmutter, die allgemein mit dem Bezugszeichen 10 bezeichnet ist. Diese dient in bekannter Weise zum Fixieren eines scheibenförmigen Werkzeugs an einer rotierbaren Werkzeugspindel (nicht dargestellt) mit einer Mittellängsachse 12 an einer angetriebenen Werkzeugmaschine. Eine solche Werkzeugmaschine kann insbesondere ein Winkelschleifer sein, der mit einer Auslaufbremse (nicht dargestellt) versehen ist. Gerade bei Winkelschleifern, deren Werkzeuge mit einer sehr hohen Drehzahl angetrieben werden, ist es notwendig, eine sichere Fixierung des scheibenförmigen Werkzeugs sicherzustellen auch und gerade, wenn eine Auslaufbremse (auch als "Spindel-Stopp" bekannt) vorgesehen ist.

Die erfindungsgemäße Spannmutter 10 wird in üblicher Weise mit ihrem an einer zentralen Ausnehmung bzw. Bohrung 22 innenumfänglich angeordneten Innengewinde (nicht dargestellt) auf das Außengewinde (nicht dargestellt) der rotierbaren Werkzeugspindel aufgeschraubt und fixiert das scheibenförmige Werkzeug, indem es dieses an einen Anlageflansch (nicht dargestellt) der Werkzeugspindel presst bzw. das scheibenförmige Werkzeug dagegen verspannt.

Die erfindungsgemäße Spannmutter 10 umfasst einen Mutterkörper 20 sowie einen relativ zu dem Mutterkörper 20 bewegbaren Sicherungsring 30. Der Mutterkörper 20 weist, wie vorstehend erwähnt, eine zentrale Ausnehmung 22 mit einem entsprechenden Innengewinde und einer Fase 22a auf, sowie eine Anlageschulter 24 mit einer entsprechenden Fase 24a. Die beiden Fasen 22a und 24a dienen zur zentrierten Ausrichtung des Sicherungsrings 30 relativ zum Mutterkörper 20 bei der Montage und dem Betrieb der Spannmutter 20.

Weiterhin umfasst der Mutterkörper 20 eine umlaufende Nut 26, die in axialer Richtung (bezogen auf die Achse 12) an ihrem radial äußeren Endabschnitt durch eine Schulter 26a begrenzt ist und einen Nutgrund 26b aufweist. Der Nutgrund 26b ist in der dargestellten Ausführungsform derart gestaltet, dass die Nuttiefe nach radial außen (bezogen auf die Achse 12) zunimmt. Dementsprechend ist der Nutgrund nicht in einer Ebene senkrecht zu der Achse 12 angeordnet, sondern zu einer solchen imaginären senkrechten Ebene geneigt ausgebildet.

Der Sicherungsring 30 weist an seinem Innenumfang wenigstens einen, in der gezeigten Ausführungsform zwei Sicherungsvorsprünge 32 auf, die im Wesentlichen in axialer Richtung (bezogen auf die Achse 12) erstrecken. Diese dienen zur drehfesten Sicherung des Sicherungsrings 30 an der Werkzeugspindel, die zu diesem Zweck eine Nut oder eine entsprechende Ausnehmung (nicht dargestellt) aufweist. Der bzw. die Sicherungsvorsprünge 32 werden in die jeweilige Nut der Werkzeugspindel eingefädelt und stützen den Sicherungsring 32 gegen eine relative Verdrehung gegenüber der Werkzeugspindel während des Aufschraubvorgangs der Spannmutter 10 und des Betriebs der Werkzeugspindel sicher ab. Auf diese Weise dreht sich während des Aufschraubens der Spannmutter 10 auf die Werkzeugspindel nur der Mutterkörper 20 relativ zur Werkzeugspindel, nicht jedoch der Sicherungsring 30. Der Mutterkörper 20 führt somit auch eine relative Drehbewegung gegenüber dem Sicherungsring 30 aus.

Weiterhin umfasst der Sicherungsring 30 einen ringförmigen Anlageabschnitt 34 zur Anlage an das scheibenförmige Werkzeug sowie wenigstens einen (in der gezeigten Ausführungsform drei) Eingriffsabschnitt 36, der in einem montierten Zustand der Spannmutter 10 die Schulter 26a des Mutterkörpers 20 zu hintergreifen vermag. Durch Vorsehen des Eingriffsabschnitts 36 in Kombination mit der Schulter 26a wird sichergestellt, dass der Sicherungsring 30 unverlierbar mit dem Mutterkörper 20 der Spannmutter 10 verbunden ist.

Wie anhand der Figur 1 erkennbar ist, ist zwischen dem Mutterkörper 20 und dem Sicherungsring 30 eine zusätzliche elastische Federeinheit in Form einer Tellerfeder 40 vorgesehen. Diese ist in einen in axialer Richtung variablen Zwischenraum eingelegt, der axial durch die Nut 26 und den Sicherungsring 30 begrenzt ist. Wird der Sicherungsring 30 relativ zu dem Mutterkörper axial verschoben, verringert sich die maximale Erstreckung des Zwischenraums in axialer Richtung soweit, bis der Sicherungsring mit seinem Anlageabschnitt 38 in Anlage an einen korrespondieren Anlageabschnitt 28 des Mutterkörpers 20 gelangt.

Dabei ist insbesondere in der Figur 1 deutlich zu erkennen, dass der maximale Zwischenraum zwischen Mutterkörper 20 und Sicherungsring 30 in axialer Richtung größer ist als die darin aufgenommene elastische Federeinheit 40. Dies zeigt sich in der Figur 1 an dem zwischen dem Eingriffsabschnitt 36 und der Anlageschulter 26a verbliebenen Spiel, wobei die Tellerfeder 40 in der Figur 1 in einem vollständig entspannten Zustand gezeigt ist und damit in ihrer maximalen axialen Erstreckung. Folglich wird erst dann eine Federkraft in die Spannmutter 10 eingeleitet, wenn der Anlageabschnitt 34 des Sicherungsrings 30 sich erstmalig an das scheibenförmige Werkzeug anlegt, während die Spannmutter 20 mit ihrem Mutterkörper 20 auf die Werkzeugspindel aufgeschraubt wird.

Die Tellerfeder 40 hat bei der erfindungsgemäßen Spannmutter die Funktion, eine Federkraft in diese einzuleiten, wodurch eine Reibungskraft und bei einer Drehbewegung der Spannmutter 10 ein resultierendes Reibmoment zwischen dem Innengewinde des Mutterkörpers 20 und dem Außengewinde der Werkzeugspindel erzeugt wird, welches die Spannmutter 10 auf der Werkzeugspindel sichert, wenn die Werkzeugspindel mittels der Auslaufbremse abrupt abgebremst wird.

Ohne eine derartige Sicherung würde das scheibenförmige Werkzeug sein infolge seiner Trägheit bestehendes Schwungmoment auf die Spannmutter übertragen, wodurch diese unerwünscht von der Werkzeugspindel abgeschraubt werden könnte. Bei der vorliegenden Erfindung indes kann sich zwar der Mutterkörper 20 der Spannmutter 10 aufgrund des eingeleiteten Schwungmoments von dem scheibenförmigen Werkzeug geringfügig gegenüber der Werkzeugspindel verdrehen, jedoch bewirkt dann die Federkraft der Tellerfeder 40 in ihrer komprimierten Stellung (vgl. Figur 2) ein Reibmoment zwischen dem Innengewinde des Mutterkörpers 20 und dem Außengewinde der Werkzeugspindel (nicht dargestellt), das die Spannmutter vor einem weiteren Abschrauben sichert.

Soll jedoch die Spannmutter 10 von der Werkzeugspindel gelöst werden, um beispielsweise das scheibenförmige Werkzeug auszutauschen, muss der Anwender nur über eine vorbestimmte Anzahl von Gewindegängen die Spannmutter 10 gegen das bestehende (abnehmende) Reibmoment verdrehen, nämlich solange, bis die Tellerfeder 40 in ihre vollständig entspannte Stellung zurückgekehrt ist (vgl. Figur 1). Darüber hinaus ist die Spannmutter wie eine normale Mutter vergleichsweise reibungsarm von der Werkzeugspindel zu lösen.

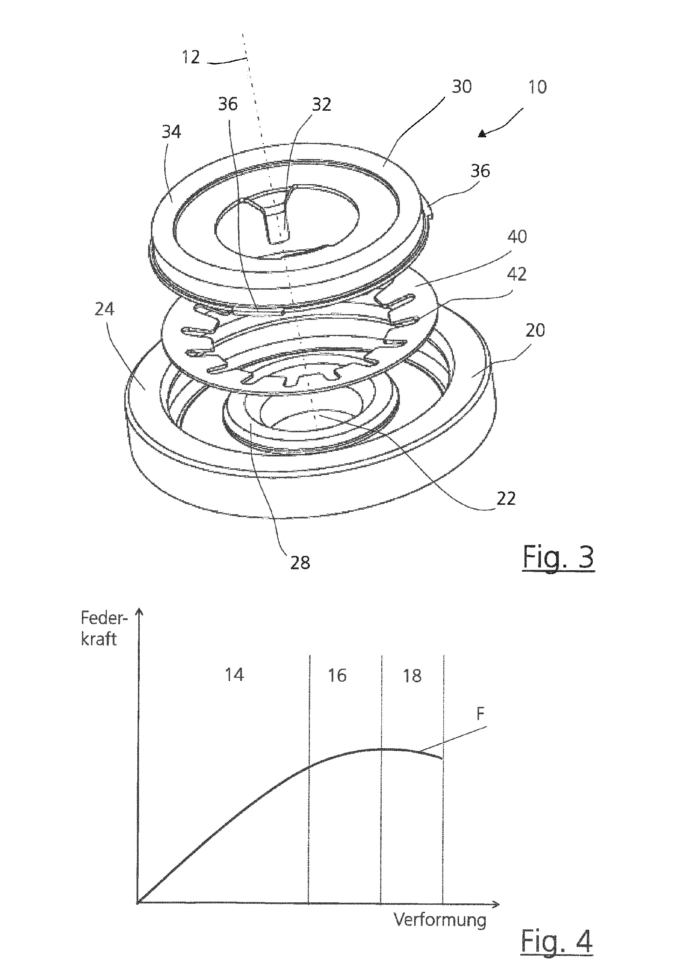

Eine weitere Besonderheit der dargestellten Ausführungsform der vorliegenden Erfindung besteht in der Ausgestaltung der Tellerfeder 40, die eine spezifische Federkennlinie F aufweist, welche zumindest einen, in der gezeigten Darstellung zwei degressive Abschnitte 16, 18 umfasst (vgl. Figur 4). Wie man an der in der Figur 4 schematisch dargestellten Federkennlinie F erkennen kann, nimmt die Federkraft bei zunehmender Verformung zunächst näherungsweise linear (Abschnitt 14) danach gegebenenfalls degressiv (Abschnitt 16) zu, bis sie ein Maximum erreicht hat und nimmt dann zumindest abschnittweise degressiv (Abschnitt 18) wieder ab. Alternative Ausgestaltungen, beispielsweise ein zunächst progressiver Verlauf sind ebenfalls denkbar.

Entsprechend der auf den Mutterkörper 20 axial einwirkenden Federkraft verändert sich auch das wirkende Reibmoment, so dass beim Aufschrauben der erfindungsgemäßen Spannmutter 10 zunächst ab dem Moment der Anlage des Anlageabschnitts 34 des Sicherungsrings 30 ein zunehmende Reibmoment überwunden werden muss. Dann, wenn die Anlageschulter 24 des Mutterkörpers 20 sich ebenfalls an das scheibenförmige Werkzeug anlegt (wodurch ein zusätzliches Reibmoment entsteht) nimmt infolge der Federkennlinie F der Tellerfeder 40 das von der Tellerfeder 40 und deren Federkraft erzeugte Reibmoment wieder ab bzw. bleibt gleich oder nimmt in geringerem Maße zu. Somit wird sichergestellt, dass dem Festziehen bzw. Festspannen des scheibenförmigen Werkzeugs mittels der Spannmutter kein unverhältnismäßig hohes Reibmoment entgegensteht.

Das Auf- und Abschrauben der erfindungsgemäßen Spannmutter erfolgt entsprechend vergleichsweise schnell und einfach, wie bei einer herkömmlichen sogenannten 2-Loch-Mutter. Weiterhin bietet die erfindungsgemäße Spannmutter eine Sicherung gegenüber eines unerwünschten Lösens bei Betätigung der Auslaufbremse (auch als Spindelstopp bezeichnet). Die Spannmutter kann zudem ohne Verwendung eines zusätzlichen Werkzeugs auf bzw. abgeschraubt werden.

Anhand der Figur 3, die die Spannmutter 10 in einer Explosionsdarstellung zeigt, ist ersichtlich, dass die Tellerfeder 40 eine Reihe von Aussparungen umfasst, welche zum einen für die gewünschte Federkennlinie F und zum anderen für ein vergleichsweise geringes Gewicht der Spannmutter günstig sind. Ferner erkennt man, dass der Eingriffsabschnitt 36 des Sicherungsrings 30 nicht als ein umlaufender Flansch ausgebildet sein muss, sondern durch mehrere entsprechende Vorsprünge 36 (in der gezeigten Darstellung drei Vorsprünge) gebildet sein kann. Alternativ ist es selbstverständlich ebenfalls denkbar weniger oder mehr solcher Vorsprünge vorzusehen, die bevorzugt gleichmäßig am Außenumfang des Sicherungsrings 30 angeordnet sind.

## Patentansprüche

1. Spannmutter (10) zum Fixieren eines scheibenförmigen Werkzeugs an einer rotierbaren Werkzeugspindel einer angetriebenen Werkzeugmaschine mit Auslaufbremse, umfassend einen Mutterkörper mit einem Innengewinde zum Aufschrauben auf der Werkzeugspindel, einen relativ zu dem Mutterkörper bewegbaren Sicherungsring (30), der unverlierbar mit dem Mutterkörper (20) verbunden und drehfest mit der Werkzeugspindel verbindbar ist, und eine elastische Federeinheit (40), die in einem in seiner axialer Erstreckung variablem Zwischenraum zwischen dem Mutterkörper (20) und dem Sicherungsring (30) angeordnet ist und infolge einer in Richtung der Längsachse (12) der Werkzeugspindel wirkenden Axialkraft verformt werden kann,
**dadurch gekennzeichnet, dass** der variablen Zwischenraum in seiner maximalen axialen Erstreckung größer ist als die darin aufgenommene elastische Federeinheit (40).

2. Spannmutter (10) nach Anspruch 1,
**dadurch gekennzeichnet, dass** die elastische Federeinheit (40) wenigstens eine Feder umfasst.

3. Spannmutter (10) nach Anspruch 1 oder 2,
**dadurch gekennzeichnet, dass** der Sicherungsring (30) relativ zu dem Mutterkörper (20) um die Längsachse (12) der Werkzeugspindel verdrehbar und entlang dieser Achse (12) translatorisch verschiebbar ist.

4. Spannmutter (10) nach einem der Ansprüche 1 bis 3,
**dadurch gekennzeichnet, dass** der Sicherungsring (30) wenigstens einen, vorzugsweise mehrere Sicherungsvorsprünge (32) aufweist, wobei jeder Sicherungsvorsprung (32) in einer korrespondieren Nut an der Werkzeugspindel aufnehmbar ist, um den Sicherungsring (30) drehfest mit der Werkzeugspindel zu verbinden.

5. Spannmutter (10) nach einem der vorhergehenden Ansprüche,
**dadurch gekennzeichnet, dass** der Sicherungsring (30) zumindest abschnittsweise von dem Mutterkörper (20) hintergriffen und auf diese Weise unverlierbar mit diesem verbunden ist.

6. Spannmutter (10) nach einem der Ansprüche 2 bis 5,
**dadurch gekennzeichnet, dass** die wenigstens eine Feder als Tellerfeder (40) ausgebildet ist.

7. Spannmutter (10) nach einem der Ansprüche 2 bis 6,
**dadurch gekennzeichnet, dass** die elastische Federeinheit (40) eine Federkennlinie (F) aufweist, die in ihrem Arbeitsbereich zumindest einen degressiven Abschnitt (16, 18) aufweist.

8. Spannmutter (10) nach einem der vorhergehenden Ansprüche,
**dadurch gekennzeichnet, dass** der Sicherungsring (30) einen Anlageabschnitt (34) zur Anlage an das zu fixierende Werkzeug umfasst.

9. Spannmutter (10) nach einem der vorhergehenden Ansprüche,
**dadurch gekennzeichnet, dass** der Mutterkörper (20) eine umlaufende nutförmige Ausnehmung (26) umfasst, die den Zwischenraum teilweise begrenzt, wobei der Sicherungsring (30) zumindest teilweise in der Ausnehmung (26) aufnehmbar ist.

10. Spannmutter (10) nach einem der vorhergehenden Ansprüche,
**dadurch gekennzeichnet, dass** der Sicherungsring (30) an seinem Außenumfang einen wenigstens abschnittsweise umlaufenden Eingriffsabschnitt (36) aufweist, der mit einer radial nach innen erstreckten Schulter (26b) am Mutterkörper (20) in der Weise zusammenzuwirken vermag, dass die axiale Bewegung des Sicherungsrings (30) relativ zu dem Mutterkörper (20) in eine erste Richtung begrenzt ist.

11. Spannmutter (10) nach einem der vorhergehenden Ansprüche,
**dadurch gekennzeichnet, dass** der Sicherungsring wenigstens einen ersten Stützabschnitt (36a) aufweist, mit dem er sich an der elastischen Federeinheit (40) abzustützen vermag.

12. Spannmutter (10) nach einem der vorhergehenden Ansprüche,
**dadurch gekennzeichnet, dass** der Sicherungsring (30) wenigstens einen zweiten Stützabschnitt (38) aufweist, mit dem er sich an dem Mutterkörper (20) abzustützen vermag, so dass die axiale Bewegung des Sicherungsrings (30) relativ zu dem Mutterkörper (20) in eine zweite Richtung begrenzt ist.
